# EUROPEAN PATENT APPLICATION

(11) **EP 3 639 707 A1**
(43) Date of publication of application: **22.04.2020**
(21) Application number: 19181527.3
(22) Date of filing: 20.06.2019
(51) Int. Cl.: A47J 31/20

(54) **COFFEE MAKER AND FROTHER**

(30) Priority: 16.10.2018 US 201862746367 P; 07.05.2019 US 201916405410
(71) Applicant: Team International Group of America, Inc., Miami Gardens, FL 33169 (US)
(72) Inventor: Bardot, Laurent, Miramar, FL Florida 33029 (US); Pezold, Maik, Guangdong, Guangdong 528300 (CN); Murad, Uri, Hollywood, FL Florida 33180 (US)
(74) Representative: Aldridge, Christopher Simon

(57) **Abstract**

An appliance (100) for making beverages has a French press style carafe (104) and a base (102) adapted to receive the carafe (104) removably thereon. The carafe has a rotatable stirring blade (114). The base has a motor (110) rotationally coupled to the stirring blade (114), a heater (112), and a resting surface in thermal communication with the heater. Energization of the motor (110) causes stirring of the liquid in the pitcher (106) and energization of the heater (112) causes heating of the liquid in the pitcher (106).

## Description

### FIELD OF THE INVENTION:

The invention relates to apparatuses for beverage preparation. More specifically, the invention relates to devices and methods for the preparation of beverages, especially infused beverages such as various coffee beverages.

### BACKGROUND:

Common French presses are well known for making coffee, tea, and such. They are is housed in a cylindrical, usually glass, carafe with a removable lid. A piston passes through the lid that is attached to a round mesh strainer which is surrounded with a rubbery sliding seal. The seal allows the strainer to be moved up and down within the carafe while maintaining a seal between the cylindrical inner wall of the carafe and the strainer. Hot water is placed in the carafe to a proper level with the lid removed and new coffee grounds are added to the hot water and allowed to steep for a predetermined time which is manually estimated to cause sufficient leaching of the coffee from the grounds to become hot coffee beverage. Very hot water must be used to properly extract the coffee from the grounds. Then the strainer is inserted partially into the carafe, the lid is affixed atop the carafe, and the piston is pushed fully downwardly so that the grounds become trapped below the strainer. As the strainer is pushed fully down, a zone of spent damp coffee grounds is created below the strainer and a zone of filtered coffee beverage is created above. Then the coffee beverage left above the strainer may be served while leaving the spent grounds in the carafe. Afterward, the piston is lifted to expose the grounds for cleaning.

Of course, these age-old French presses have numerous drawbacks, including;
1. Another means must be available and used ahead of time to pre-heat the water.
2. That means or another utensil must be available for adding the hot water to the carafe.
3. The user must interact with that very hot water, posing a burn and spill risk.
4. The user must properly estimate the steeping time based on the estimated water temperature and the estimated strength of the new grounds and must then time the steeping manually and actuate the strainer and serve the beverage right at the end of the steeping period.
5. The temperature of the water cools significantly by the addition of the grounds and because the time that passes until the coffee beverage is ready for serving.
6. There is no way to re-warm any coffee left in the carafe when it is time for a second cup.
7. To froth the beverage, another means must be available and employed.

Prior art electric French press appliances have been invented, such as those described in US Patents 6240833, 7279660, and 7745759, which include means for heating the water, to thereby eliminate drawbacks 1-3. But such devices include no means for frothing or stirring the beverage within the carafe to create lattes and such.

There still exists the need for an apparatus which adds the ability to stir or froth the beverage in the carafe of a French press device, and such may be an object of the invention. There exists the need the ability to heat the water in such an apparatus, and such may be an object of the invention. There exists the need for the ability to so froth and heat the beverage within the carafe without the need for shafts, wiring, and such to pass through the carafe, and such may be an object of the invention. There exists the need for such an apparatus including a stationary base through which is controlled the heating and frothing while the carafe rests thereupon, and such may be an object of the invention. Further needs and objects of the invention will become apparent upon a review of the following disclosure of an exemplary embodiment.

### SUMMARY OF THE INVENTION:

The invention may be embodied in or practiced using a French press type of coffee maker that is removably disposed atop a stationary base. The base is electrically operated, with a heating element, a motor, a control, and a display. The carafe includes a stirring blade couple to and caused to rotate by the motor. The control may include temperature, beverage quality, and beverage quantity selection controls, one or more timers, means for energizing the heating element and the motor, and means for causing the display to indicate such things as the selected beverage temperature and beverage strength, and beverage readiness.

The invention may be embodied in or practiced using an appliance for making beverages including a carafe, and a base adapted to receive the carafe removably thereon. The carafe may include a pitcher, a plunger, and a rotatable stirring blade. The pitcher may be adapted to receive solid particulates and liquid and may have a vertical inner peripheral wall and a closed bottom. The plunger may be adapted to move vertically within the pitcher and may include a porous strainer that sealingly engages the vertical inner peripheral wall and is adapted such that the liquid may pass through the moving strainer while the solid particulates are retained there-under. The base may include a motor rotationally coupled to the rotatable stirring blade and a resting surface adapted to receive the closed bottom of the pitcher thereon. Energization of the motor may cause stirring of the liquid in the pitcher. The motor may be rotationally coupled to the rotatable stirring blade through magnetic coupling of a driving magnetic rotor rotatable with the motor and a driven magnetic rotor rotatable with the stirring blade. The driving magnetic rotor and the driven magnetic rotor may be physically separated by a gap. The resting surface of the base and the closed bottom of pitcher may pass through the gap. The closed bottom of the pitcher may be un-perforated. The driving magnetic rotor may be a cooling fan and cause airflow between the motor and the driving magnetic rotor to reduce heating of the driving magnetic rotor by operation of the motor. The gap may be at least 4MM.

The invention may alternatively be embodied in or practiced using an appliance for making beverages having a carafe and a heating base adapted to receive the carafe removably thereon. The carafe may include a pitcher, a plunger, and a rotatable stirring blade. The pitcher may be adapted to receive solid particulates and liquid, and may have a vertical peripheral inner wall and a closed bottom. The plunger may be adapted to move vertically within the pitcher and may include a porous strainer that sealingly engages the vertical inner peripheral wall and may be adapted such that the liquid may pass through the moving strainer while the solid particulates are retained there-under. The heating base may include a motor rotationally coupled to the rotatable stirring blade, a heater, and a resting surface in thermal communication with the heater, the resting surface may be adapted to receive the closed bottom of the pitcher thereon in thermal communication with the heater. Energization of the motor may cause stirring of the liquid in the pitcher and energization of the heater may cause heating of the liquid in the pitcher. The motor may be rotationally coupled to the rotatable stirring blade through magnetic coupling of a driving magnetic rotor rotatable with the motor and a driven magnetic rotor rotatable with the stirring blade. The driving magnetic rotor and the driven magnetic rotor may be physically separated by a first gap. The resting surface of the heating base and the closed bottom of pitcher may pass through the first gap. The closed bottom of pitcher may be un-perforated. The driving magnetic rotor may be a cooling fan and cause airflow between the motor and the driving magnetic rotor to reduce heating of the driving magnetic rotor by operation of the motor. The driving magnetic rotor and the heater may be separated by a second gap. The cooling fan may cause airflow within the second gap to reduce heating of the driving magnetic rotor by operation of the heater. The second gap may be at least 1MM. The first gap may be at least 4MM.

The invention may still further be embodied in or practiced using an appliance comprising a French press carafe and a base adapted to receive the carafe removably thereon. The carafe may be adapted to receive liquid and may include a rotatable stirring blade and a closed bottom. The base may include a motor, a heater, and a resting surface in thermal communication with the heater. The resting surface may be adapted to receive the closed bottom of the pitcher thereon in thermal communication with the heater. The motor may be rotationally coupled to the rotatable stirring blade through magnetic coupling of a driving magnetic rotor rotatable with the motor and a driven magnetic rotor rotatable with the stirring blade. The closed bottom may be un-perforated. Energization of the motor may cause stirring of the liquid and energization of the heater may cause heating of the liquid.

Further features and aspects of the invention are disclosed with more specificity in the Detailed Description and Drawings provided herein and showing exemplary embodiments of the invention.

### BRIEF DESCRIPTION OF THE DRAWINGS:

An exemplary embodiment of a French press appliance in accordance with or useful in practicing the invention, and a container for use therewith in accordance with or useful in practicing the invention, are shown in the accompanying Drawings, of which;
Fig. 1 is a frontal perspective view of the appliance;
Fig. 2 is a frontal perspective view of the appliance with the carafe lifted from the base;
Fig. 3 is a partially cut-away frontal perspective view of the appliance;
Fig. 4 is a frontal cut-away view of the base and stirrer of the appliance;
Fig. 5 is a cut-away view of the stirring system of the appliance;
Fig. 6 is a perspective view of the carafe of the appliance;
Fig. 7 is an exploded view of the plunger of the carafe of the appliance;
Fig. 8 is an exploded view of the stirrer of the carafe of the appliance;
Fig. 9 is an electric schematic diagram of the appliance;
Fig. 10A is an electric schematic diagram of the main PC board of the appliance;
Fig. 10B is a pin diagram of the main connector of the main PC board of the appliance;
Fig. 10C is a pin diagram of the integrated circuit of the main PC board of the appliance;
Fig. 10D is a schematic diagram of the buzzer sub-circuit of the main PC board of the appliance;
Fig. 10E is a schematic diagram of the relay sub-circuit of the main PC board of the appliance;
Fig. 10F is a schematic diagram of the motor sub-circuit of the main PC board of the appliance;
Fig. 10G is a pin diagram of the sub-connector of the main PC board of the appliance;
Fig. 10H is a schematic diagram of the NTC sub-circuit of the main PC board of the appliance;
Fig. 11 is a front view of the control of the base of the appliance;
Fig. 12 is an exploded underside view of the motor and heating plate of the base of the appliance;
Fig. 13 is an exploded view of the stirring and heating components of the base of the appliance;
Fig. 14 is a side cutaway view of the appliance with the carafe lifted above the base; and
Fig. 15 is a side cutaway view of the appliance with the carafe rested on the base.

### DESCRIPTION OF AN EXEMPLARY EMBODIMENT:

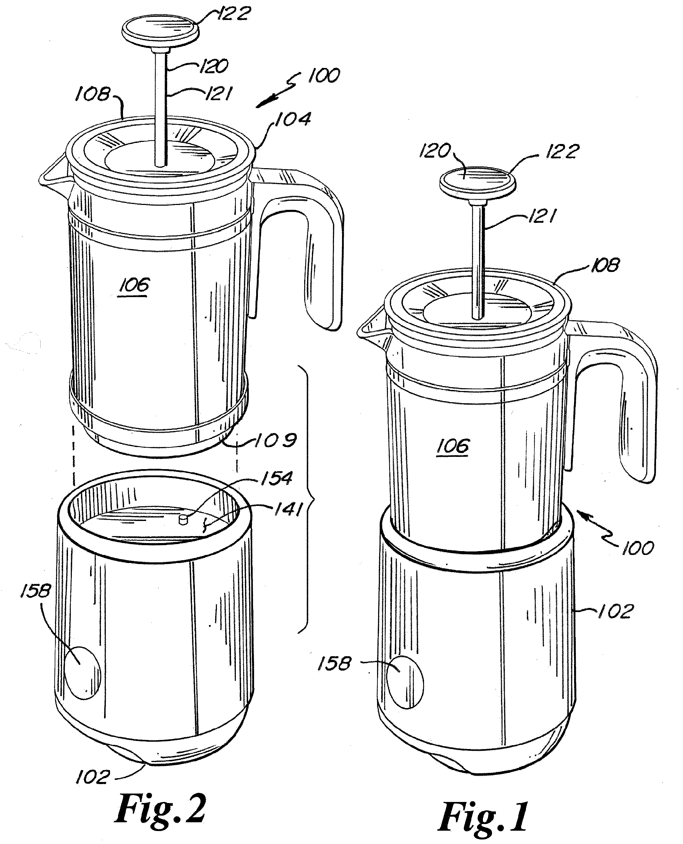

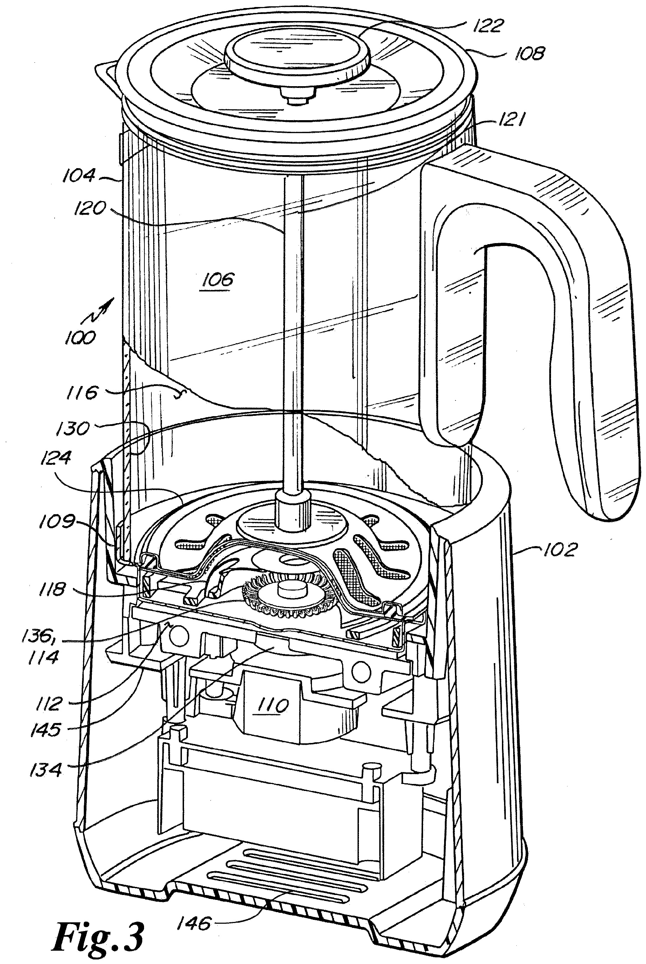

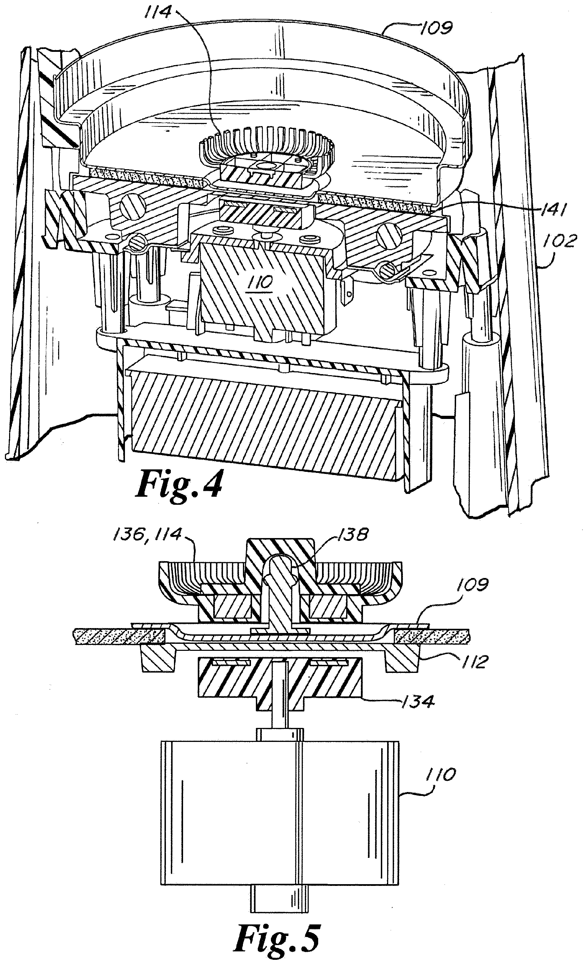

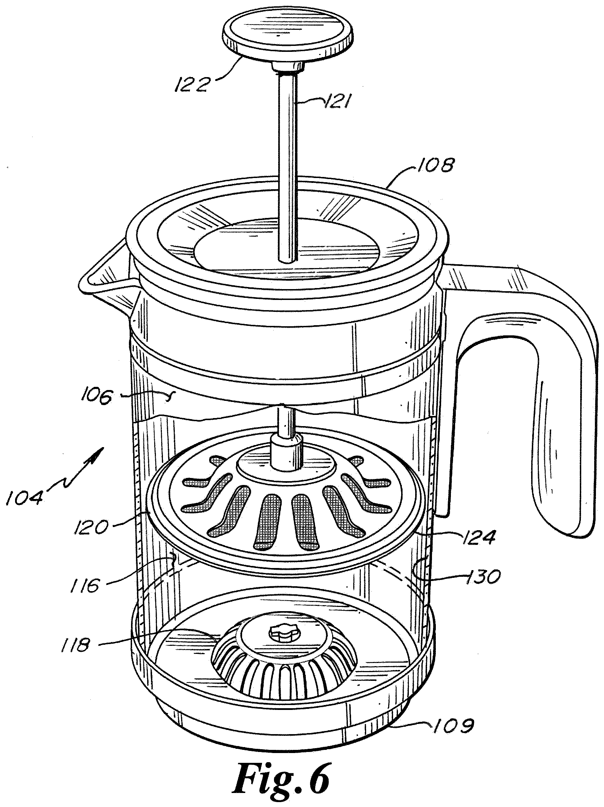

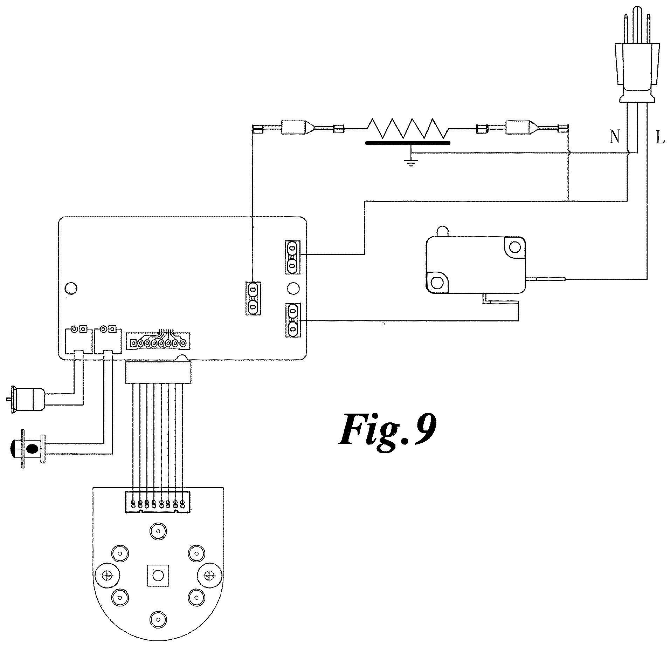

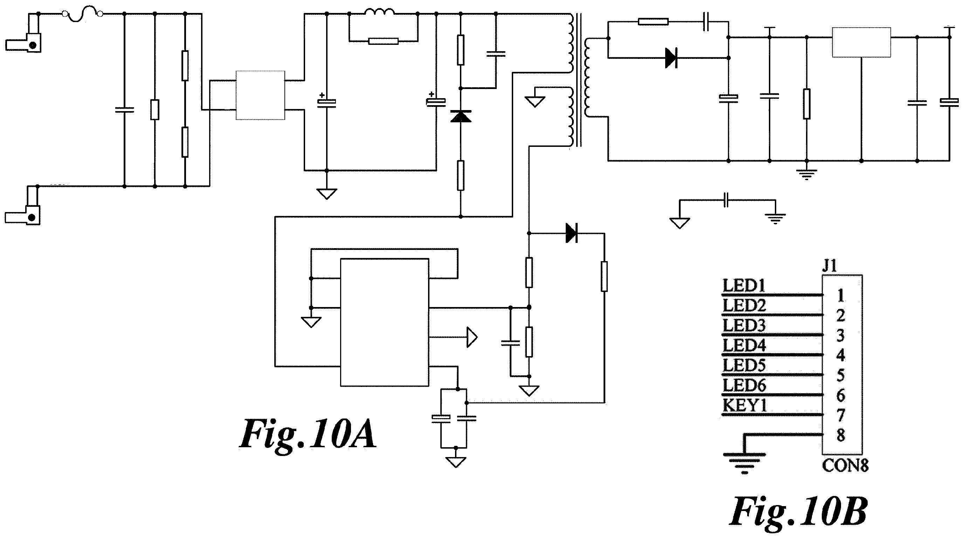

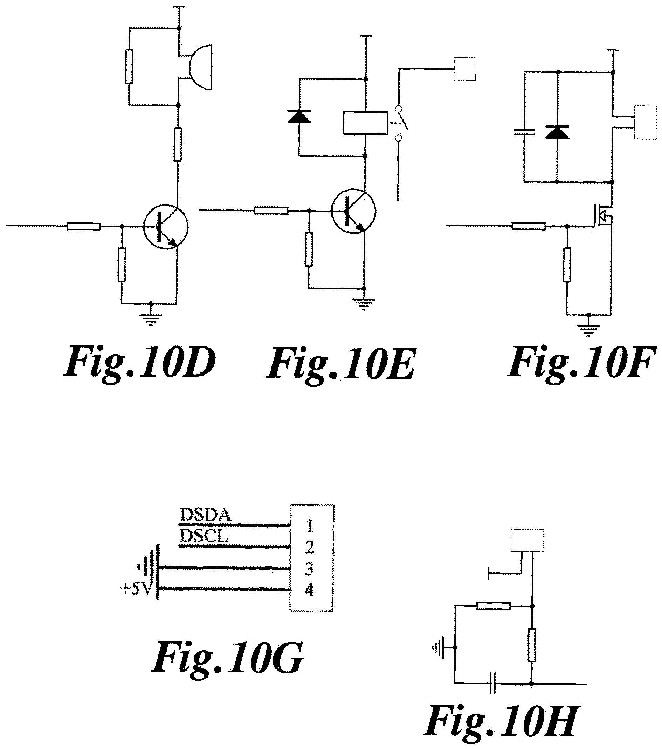

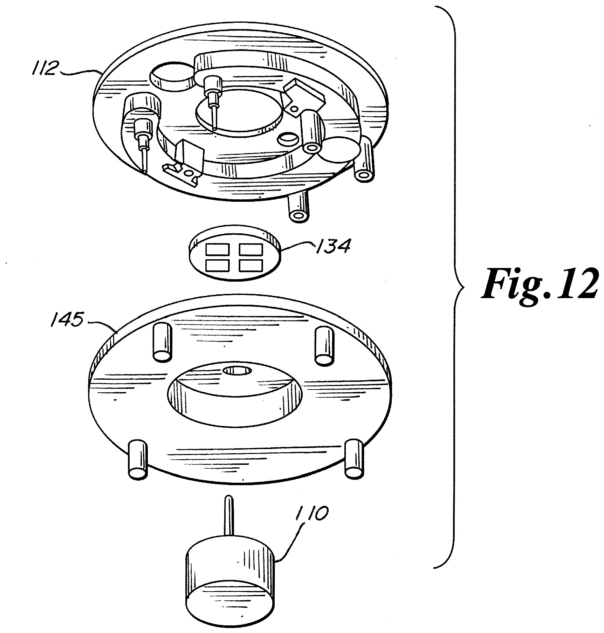

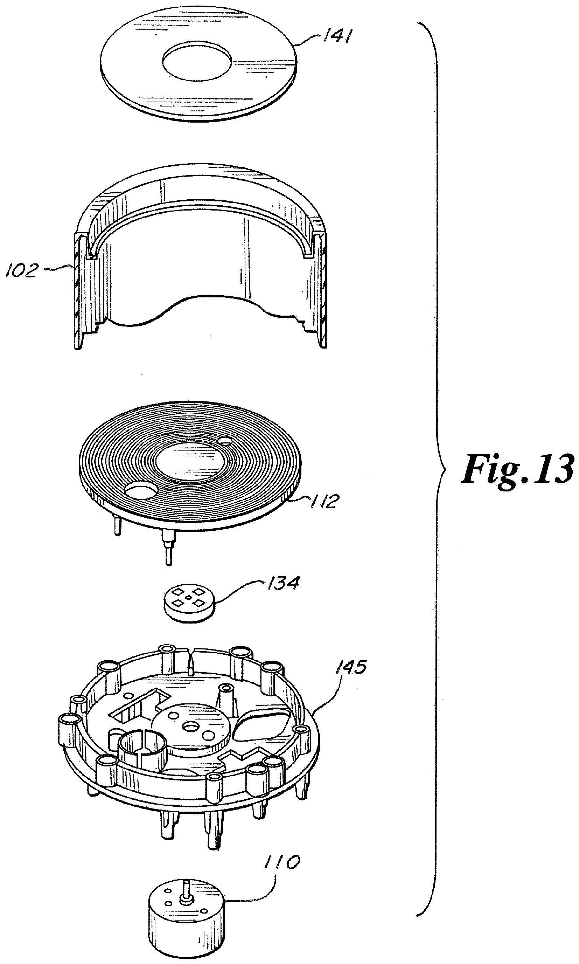

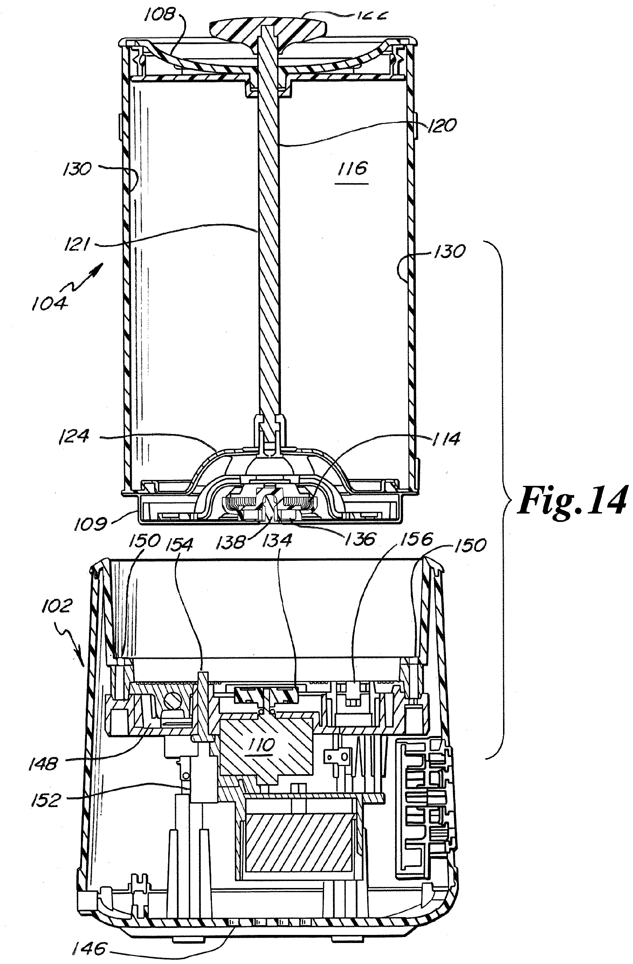

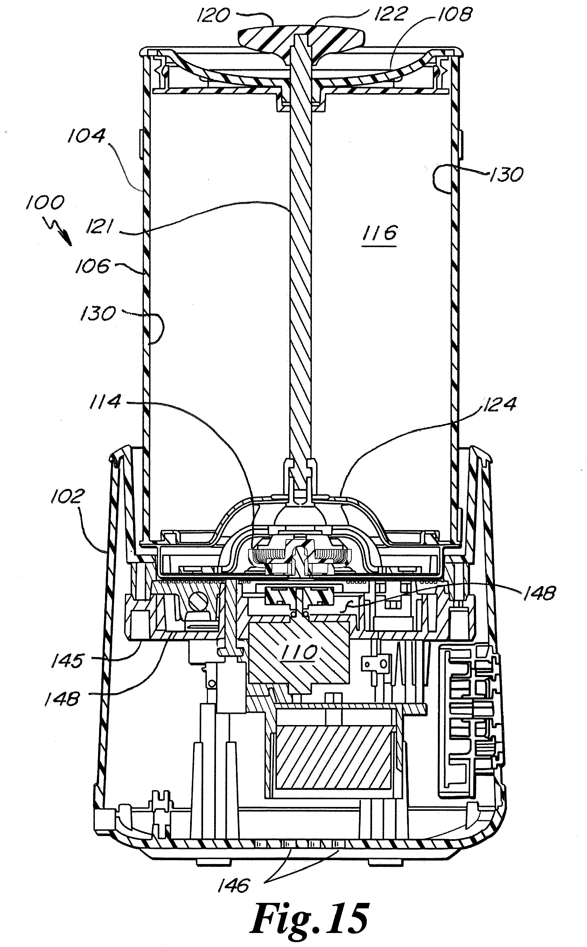

Referring to Figs 1 through 15 there is shown an exemplary French press beverage-making appliance 100. The appliance includes a base 102 and a carafe 104. The carafe includes a preferably glass pitcher 106 and a removable round lid 108. The glass of the pitcher is predominantly a cylinder with an open top that accepts the lid and an open bottom that is sealingly closed by a round metal bottom cover 109. The base includes an electric motor 110 and a heating plate 112. The pitcher defines an interior reservoir 116 for containing liquid and includes a rotatable stirring blade 114 disposed centrally adjacent the round bottom cover. The stirring blade is protected within a perforated stationary dome-shaped cage 118.

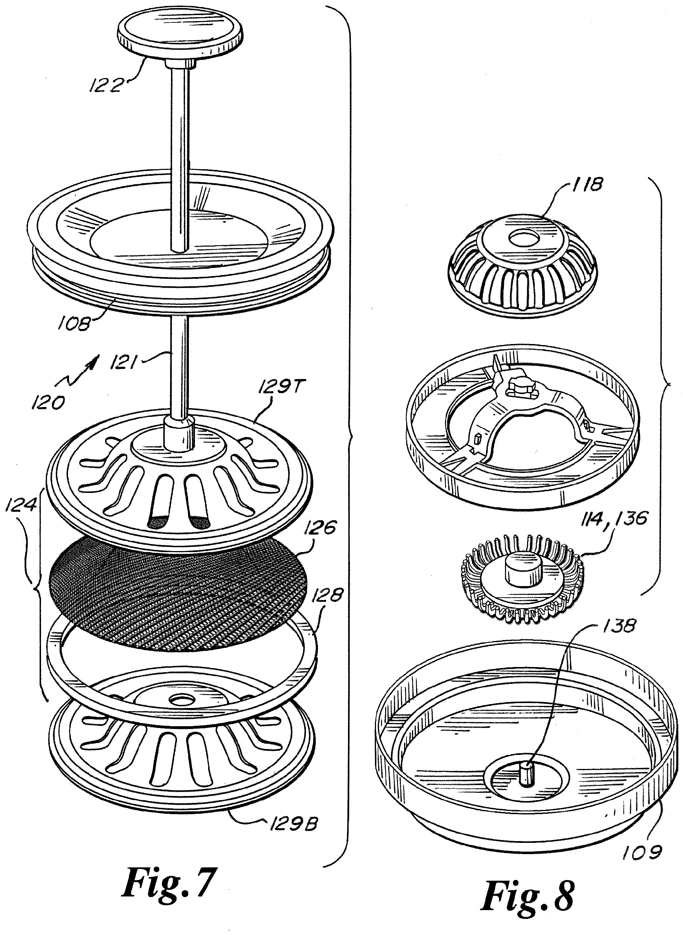

Plunger 120 is vertically movable relative to the lid and within and relative to the pitcher when the lid is fitted atop the pitcher. The plunger, as best seen in Fig 7, has a central shaft 121 that passes through a central though-hole in the round lid, a knob 122 at the shaft's top end, and a circular strainer assembly 124 at is bottom end. The strainer assembly has a bell-shaped screen 126, a peripheral circular seal 128 and top and bottom perforated plates 129T and 129B. The bell-shaped perforated plates are adapted to attach to the bottom of shaft 121 capturing the circular seal and screen there-between. The circular seal is capsized and shaped to slidingly and sealingly engage the cylindrical inner wall 130 of the pitcher as the plunger is pushed down.

The screen and seal prevent the passage of solid particles, such as coffee grounds, from passing from under to atop the strainer, but allow the passing of liquids through the perforations in the plates and through the screen when the plunger is pushed down. The screen is preferably a stainless-steel mesh, the perforated plates and central shaft are preferable made of stainless steel, and the seal is preferably made of silicone rubber or of a thermoplastic rubber capable of withstanding temperatures over 100C. The bell shape of the strainer assembly creates a concavity on the assembly's underside to avoid cage 118 when the plunger is pushed all the way down. The concavity is slightly larger than the dome-shaped cage.

When energized, the motor causes rotation of driving magnetic rotor 134. Driven magnetic rotor 136 is integral and rotationally coupled with the stirring blade 114, both spinnable about post 138 protruding upwardly from and affixed to the center of the pitcher's round bottom cover 109. When the carafe is properly positioned atop the base, the driving and driven magnetic rotors are coaxially aligned and in sufficient proximity to provide magnetic co-attraction there-between, such that spinning of the driving magnetic rotor will result in spinning of the driven magnetic rotor. Preferably, the distance between the two rotors is approximately 4MM.

Accordingly, when the carafe is properly positioned atop the base and the motor is energized, the rotation of the driving magnetic disk causes rotation of the driven magnetic disk and the stirring blade, without requiring any physical connection through the bottom of the pitcher. The bottom cover of the pitcher does not require, and does not have, perforation by any holes, and has no shafts passing therethrough, and no unreliable and short-lived rotational seals are needed. This extends the life of the appliance and prevents leaking, both out of the pitcher and into the base.

Alternatively but less-preferably, the stirring blade could be driven by a mechanical interface between the blade and the motor, passing through both the top of the base and the bottom of the pitcher, such as those used in common countertop blenders and such may be considered to be within the invention, but those arrangements require short-lived and unreliable seals and expensive leak-proof bushing arrangements.

The pitcher's bottom cover is preferably made of aluminum, both to maximize thermal conductivity and to avoid magnetic interference between the driving and driven rotors, but acceptable grades of stainless steel may also be used.

Heating plate 112 is preferably of die-cast aluminum and has embedded therein a tubular electric heating element 140. To the top of the heating plate is bonded in thermal communication a flat circular preferably aluminum disk 141 adapted to receive the flat circular bottom 142 of the pitcher's bottom cover 109. Disk 141 may be covered with a non-stick coating such as PTFE.

When the pitcher is properly positioned atop the base, the flat circular surface of the heating plate and the flat circular bottom of the bottom cover are in optimal thermal communication such that energization of the heating element causes heating of the pitcher and any liquid in its reservoir 116.

Higher temperatures are naturally realized within the base by energization of the heating element and operation of the electric motor. An inventive thermal isolation and cooling arrangement prevents these from impacting the magnetic coupling of the driving and driven magnetic rotors and prevents unsafe overheating within the base. The motor is mounted to the heating plate through thermally insulating motor mounting plate 145. The driving magnetic rotor has a non-smooth perimeter and is found to function as a rudimentary fan blade in that its rotation disturbs the air within the base sufficiently that cool air is drawn into the base's interior through vents 146 in the underside of the base, and forces that air through a gap 148 between the motor mounting plate and the heating plate to cool both, and exhausts the air through slots 150 atop the base. The gap is preferably at least 1MM.

The base also includes micro-switch 152 and microswitch probe 154, which is biased upwardly to engage the carafe and sense its removal from the base. When the carafe is lifted, the probe is free to move upwardly and release the micro-switch to open it and cease operation of the appliance.

Thermal sensor 156 engages the bottom of the carafe in thermal communication, both to sense the temperature of the contents of the carafe for normal operation and to sense an unsafe overheat condition.

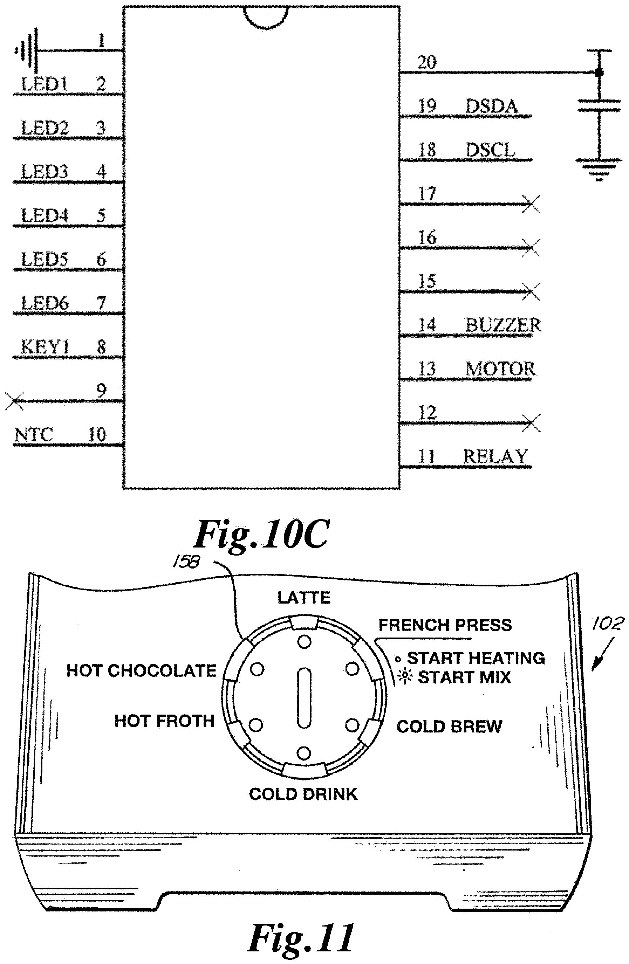

Fig 11 shows the control panel 158 which the user employs to operate the appliance. For normal American-style hot coffee, the user selects "French Press". For cold brewed coffee, the user selects "Cold Brew". For a cold beverage, such as chocolate milk or a soft drink, the user selects "Cold Drink". For hot frothed milk, the user selects "Hot Froth". For a hot beverage such as hot chocolate, the user selects "Hot Chocolate". And for a homogenously blended and foamy hot beverage such a latte, the user selects "Latte". Operation is as follows;

### SET-UP:

1. Place the empty and unlidded carafe onto the base.
2. Connect power to the base.
3. Fill the carafe with the appropriate amount of liquid (water, milk, etc.).
4. Press the desired mode (French Press, Cold Brew, Cold Drink, Hot Froth, Hot Chocolate, or Latte). Pressing the mode again will cause the appliance to enter standby mode. If carafe is removed from the base during operation, the appliance will stop working and the appliance will enter standby mode. Returning the carafe to the base and again pressing the desired mode will resume operation.

### FRENCH PRESS:

1. With appropriate amount of water in the carafe, press "French Press". The appliance will begin to heat the carafe and heat and slowly stir its contents until the water reaches a temperature of 93±3 °C. Three beep sounds will be emitted, and the heating element will stop but the stirrer will continue to slowly rotate.
2. Add coffee grounds to the stirring hot water.
3. Attach the lid to the carafe with the plunger in its uppermost position. After 180 seconds stirring ceases and a single beep sound is emitted. Ready lamp lights.
4. Slowly force the plunger downwardly to is bottommost position.
5. Remove carafe from base and serve hot coffee beverage.

### COLD DRINK:

1. With the appropriate amount of liquid (water, soda, milk, etc.) in the carafe, add ice cubes.
2. Attach lid with plunger in its uppermost position.
3. Press "Cold Drink".
4. The appliance will begin to slowly stir its contents in a cycle of 30 seconds on / 10 seconds off for 15 minutes, and then will emit a single beep sound.
5. Remove carafe from base and serve cold beverage.

### HOT FROTH:

1. With the appropriate amount of milk in the carafe, attach the lid to the carafe with the plunger in its uppermost position
2. Press "Hot Froth". The appliance will begin to heat the carafe and heat and rapidly stir its contents until the milk reaches a temperature of 65±5 °C. Then heating will cease. 20 seconds later stirring will cease and a single beep will sound.
3. Remove carafe from base and serve hot frothed milk.

### HOT CHOCOLATE:

1. With the appropriate amount of chocolate milk or milk with chocolate in the carafe, attach the lid to the carafe with the plunger in its uppermost position.
2. Press "Hot Chocolate". The appliance will begin to heat the carafe and heat and stir its contents until the contents reach a temperature 70±5 °C. Then heating will cease. 20 seconds later stirring will cease and a single beep will sound mode.
3. Remove carafe from base and serve hot chocolate.

### LATTE:

1. With the appropriate amount of milk and coffee beverage in the carafe, attach the lid to the carafe with the plunger in its uppermost position.
2. Press "Latte". The appliance will begin to heat the carafe and heat and rapidly stir its contents until the contents reach a temperature 67±5 °C. Then heating will cease. 20 seconds later stirring will cease and a single beep will sound mode.
3. Remove carafe from base and serve hot latte.

### COLD BREW:

1. With appropriate amount of water in the carafe, add ice cubes and appropriate amount of coffee grinds or tea leaves
2. Press "Cold Brew". The appliance will begin to slowly stir its contents in a cycle of 30 seconds on / 10 seconds off for 30 minutes, and then will emit a single beep sound.
3. Attach the lid to the carafe with the plunger in its uppermost position.
4. Slowly force the plunger downwardly to is bottommost position.
5. Remove carafe from base and serve cold brewed beverage.

The heating element may either be connected by physical electrical contacts as shown in the depicted embodiment, or using well known induction-heating technology, the base may include an induction coil and the carafe may include a ferrous heating plate.

The control circuitry could also be easily modified to adjust temperature settings and time periods so that various qualities of the beverages can be altered according to user preference, such as beverage strength or temperature.

The arrangement makes possible the simple preparation of a variety of beverages and such, besides just those listed above, and including but not limited to;
- Cold Brewed then Heated Coffee
- Hot Tea
- Iced Coffee
- Cold Frothed Milk
- Whipped Cream
- Mixed Cocktails

While the invention has been shown and described with reference to a specific exemplary embodiment, it should be understood by those skilled in the art that various changes in form and detail may be made without departing from the spirit and scope of the invention, and that the invention should therefore only be limited according to the following claims, including all equivalent interpretation to which they are entitled.

## Claims

1. An appliance for making beverages comprising a carafe and a base adapted to receive the carafe removably thereon;
the carafe comprising a pitcher, a plunger, and a rotatable stirring blade;
the pitcher adapted to receive solid particulates and liquid and having a vertical inner peripheral wall and a closed bottom;
the plunger adapted to move vertically within the pitcher and comprising a porous strainer that sealingly engages the vertical inner peripheral wall and is adapted such that the liquid may pass through the moving strainer while the solid particulates are retained there-under;
the base comprising a motor rotationally coupled to the rotatable stirring blade and a resting surface adapted to receive the closed bottom of the pitcher thereon;
wherein energization of the motor causes stirring of the liquid in the pitcher.

2. The appliance of claim 1, wherein the base is a heating base that comprises a heater with the resting surface of the base being in thermal communication with the heater;
wherein the resting surface is adapted to receive the closed bottom of the pitcher thereon so that the closed bottom of the pitcher is in thermal communication with the heater; and
wherein energization of the heater causes heating of the liquid in the pitcher.

3. The appliance of claim 1 or claim 2, wherein the motor is rotationally coupled to the rotatable stirring blade through magnetic coupling of a driving magnetic rotor rotatable with the motor and a driven magnetic rotor rotatable with the stirring blade.

4. The appliance of claim 3 wherein the driving magnetic rotor and the driven magnetic rotor are physically separated by a first gap.

5. The appliance of claim 4 wherein the resting surface of the base and the closed bottom of pitcher pass through the first gap.

6. The appliance of any preceding claim wherein the closed bottom of the pitcher is not perforated.

7. The appliance of claim 3 wherein the driving magnetic rotor comprises a cooling fan.

8. The appliance of claim 7 wherein the cooling fan causes airflow between the motor and the driving magnetic rotor to reduce heating of the driving magnetic rotor by operation of the motor.

9. The appliance of claim 4 wherein the first gap is at least 4MM.

10. The appliance of claim 7 or claim 8 wherein the cooling fan causes airflow between the motor and the driving magnetic rotor to reduce heating of the driving magnetic rotor by operation of the motor.

11. The appliance of claim 2 or any claim appended thereto wherein the driving magnetic rotor and the heater are separated by a second gap.

12. The appliance of claim 11 wherein the cooling fan causes airflow within the second gap to reduce heating of the driving magnetic rotor by operation of the heater.

13. The appliance of claim 12 wherein the second gap is at least 1MM.

14. The appliance of claim 13 wherein the first gap is at least 4MM.
